# EUROPEAN PATENT APPLICATION

(11) **EP 4 775 896 A1**
(43) Date of publication of application: **15.07.2026**
(21) Application number: 26150974.9
(22) Date of filing: 09.01.2026
(51) Int. Cl.: F24F 11/89, B60H 1/00, F24F 13/20

(54) **INTERFACE FOR MOUNTING A SENSOR TO AN AIR DISTRIBUTION BOX OF AN HVAC SYSTEM**

(30) Priority: 10.01.2025 IT 202500000315
(71) Applicant: DENSO THERMAL SYSTEMS S.p.A., 10046 Poirino (Torino) (IT)
(72) Inventor: CAVUOTI, Adriano, I-10046 POIRINO (Torino) (IT); CRAVERO, Fausto Maurizio, I-10046 POIRINO (Torino) (IT)
(74) Representative: Vanzini, Christian

(57) **Abstract**

Interface for mounting a sensor (30) to an air distribution box (10) of an HVAC system, comprising a wall portion (11) through which a window (12) is formed, and a sensor (30). A base (32) of the sensor (30) comprises a mounting plate (32a) configured to rest against an outer face (11b) of the wall portion (11). A probe body (33) protrudes from the mounting plate (32a) through the window (12). At least one positioning formation (32b) is formed on the mounting plate (32a) around a root (33a) of the probe body (33). The positioning formation (32b) is configured to be inserted into the window (12) and has at least one edge portion (32c) matching with the edge of the window (12). The probe body (33) comprises a pair of fins (34) protruding towards the base (32) of the sensor (30) and configured to snap engage respective opposite sides (12a) of the edge of the window (12), on the inner face (11a) of the wall portion (11).

## Description

The present invention relates to an interface for mounting a sensor to an air distribution box of an HVAC system, in particular for motor vehicles, comprising
a wall portion made of plastic material, through which a window having a quadrilateral shape is formed, said wall portion having an inner face arranged within the air distribution box, and an outer face opposite the inner face, and
a sensor comprising a base and a probe body connected to the base and carrying a sensing element responsive to a physical quantity to be detected within the distribution box.

The application of metal finned temperature sensors on air distribution boxes is known, which involves installing the sensor on a rubber sealing cap mounted on a rectangular window formed in a wall of the air distribution box.

The application of different types of sensors on air distribution boxes is also known, which involves installing the sensor on a circular window formed in a wall of the air distribution box.

A drawback encountered lies in the fact that two different air distribution box codes are required in production, with the possible incorrect mounting of a given code in case of sensor version change.

An object of the invention is to unify the interface of the air distribution box so that it is suitable for installing multiple different components, particularly to meet potential sensor version change requirements.

This object is achieved according to the invention by an interface of the type defined at the outset, wherein the base of the sensor comprises a mounting plate made of plastic material configured to rest against the outer face of the wall portion, the probe body protruding from said mounting plate through said window,
wherein at least one positioning formation is formed on the mounting plate around a root of the probe body, said at least one positioning formation being configured to fit into said window and having at least one edge portion matching with the edge of said window, and
wherein the probe body comprises a pair of fins protruding towards the base of the sensor and configured to snap engage respective opposite sides of the edge of said window, on the inner face of said wall portion.

With a single interface, it is therefore possible to manage multiple versions of the sensor (finned or of a different type) without requiring the proliferation of multiple air distribution box identification codes.

Preferred embodiments of the invention are defined in the dependent claims, which are to be understood as an integral part of the present description.

Further features and advantages of the invention will become clearer from the following detailed description of an embodiment of the invention, made with reference to the accompanying drawings, provided purely by way of illustrative and non-limiting example, in which:
- Figure 1 shows a portion of an air distribution box of an HVAC system, seen from the outside of the box;
- Figure 2 shows a temperature sensor having a metal flap and a sealing cap;
- Figure 3 shows the portion of the air distribution box of figure 1 where the temperature sensor of figure 2 has been mounted;
- Figure 4 is a perspective view showing another sensor;
- Figure 5 shows the portion of the air distribution box of figure 1 where the sensor of figure 4 has been mounted, viewed from the inside of the box.

With reference to the figures, an interface is described for mounting a sensor to an air distribution box 10 of an HVAC system, in particular for motor vehicles. Within the air distribution box 10, passages, flaps and other devices for the distribution of air managed by the HVAC system are conventionally arranged. These elements are not illustrated as they are not essential for the purposes of the invention.

In the context of the aforementioned interface, the air distribution box 10 comprises a wall portion 11 made of plastic material, through which a window 12 having a quadrilateral shape, in particular rectangular, is formed.

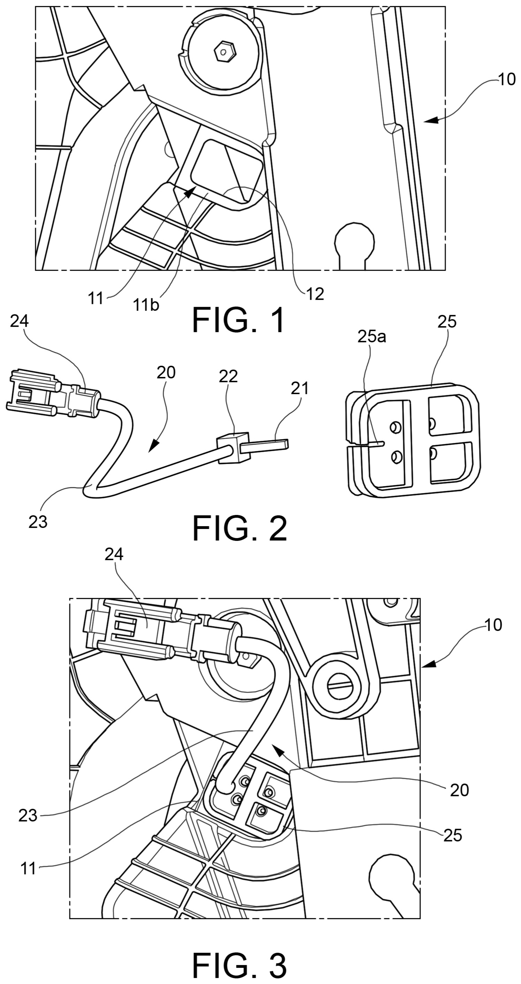

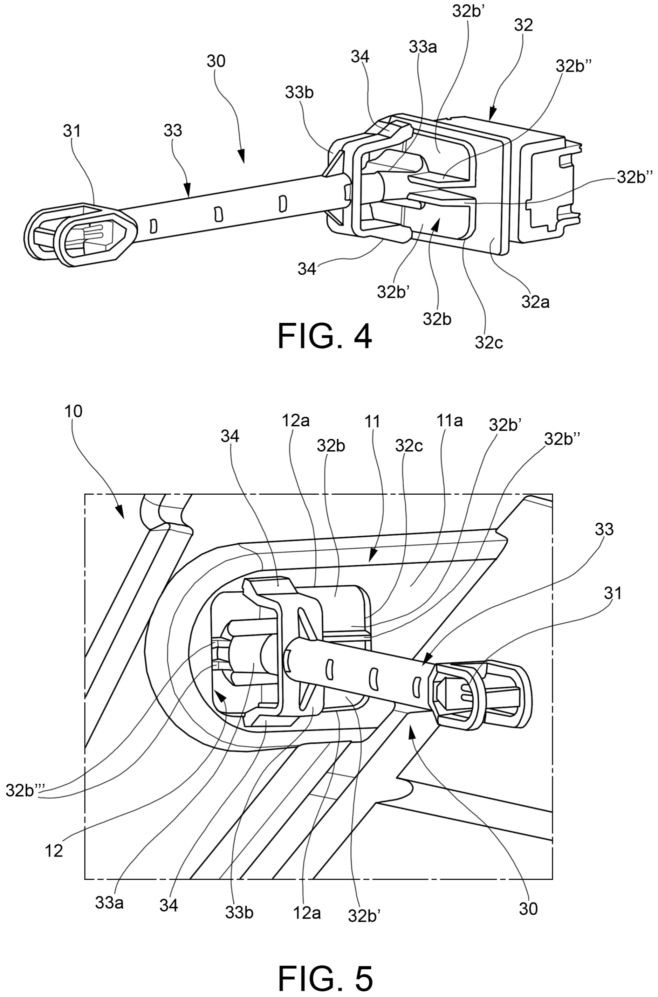

The wall portion 11 has an inner face 11a arranged inside the air distribution box 10 (shown in figure 5), and an outer face 11b (shown in figures 1 and 3) opposite the inner face 11a.

In the context of the aforementioned interface, a sensor is provided carrying a sensing element responsive to a physical quantity to be detected within the air distribution box 10. In figure 2, an example of a known sensor is shown, denoted by 20. Said sensor 20 is a temperature sensor comprising a metal fin 21 for detecting the temperature of the air flowing in a passage within the air distribution box 10, at the sensor 20. The metal fin 21 is connected to a base 22, which is in turn connected to an electric cable 23 and to a connector 24 for connection to a control circuit (not illustrated) of the HVAC system.

For the mounting of the sensor 20, a sealing cap 25 made of elastomeric material and having a shape matching that of the window 12 is conventionally provided. The sealing cap 25 has a slit 25a for the insertion of a portion of the electric cable 23 near the base 22 of the sensor 20. The sealing cap 25 on which the sensor 20 is mounted is in turn mounted on the window 12, as illustrated in figure 3.

Figures 4 and 5 show a different sensor, for example a temperature sensor alternative to the one shown in figures 2 and 3, which is denoted by 30. The sensor 30 comprises a sensing element 31 responsive to a physical quantity, for example a temperature, to be detected within the air distribution box 10.

The sensor 30 comprises a base 32 and a probe body 33 connected to the base 32 and carrying the sensing element 31.

The base 32 of the sensor 30 may comprise circuit elements and/or a connector (not illustrated) for connection to the control circuit of the HVAC system. The probe body 33 is made of plastic material and may house internally electrically conductive elements for connecting the sensing element 31 to the circuit elements and/or to the connector comprised in the base 32 of the sensor 30.

From a structural point of view, the base 32 of the sensor 30 comprises a mounting plate 32a made of plastic material configured to rest against the outer face 11b of the wall portion 11, in such a manner that the probe body 33 protrudes from the mounting plate 32a through the window 12, and therefore into the air distribution box 10 (see figure 5).

At least one positioning formation 32b is formed on the mounting plate 32a around a root 33a of the probe body 33, so as to protrude from the mounting plate 32a. The positioning formation 32b is configured to be inserted into the window 12 and has at least one edge portion 32c matching with the edge of the window 12 (see figure 5). The positioning formation 32b serves to correctly centre the sensor 30 with respect to the window 12. By way of example, it is noted that in the illustrated embodiment the positioning formation 32b comprises two pairs of ribs 32b" and 32b‴ extending in opposite directions from the root 33a of the probe body 33, and a pair of platforms 32b' arranged on opposite sides of the pairs of ribs 32b" and 32b‴ and of the root 33a of the probe body 33. In the illustrated example, the edge portion 32c of the positioning formation 32b is overall defined by edge portions of the platforms 32b' and by the ends of the pairs of ribs 32b" and 32b"'.

The probe body 33 further comprises a pair of fins 34 protruding towards the base 32 of the sensor 30 and configured to snap engage respective opposite sides 12a of the edge of the window 12, on the inner face 11a of the wall portion 11 (see figure 5). In the illustrated example, the fins 34 are connected to the probe body 33 by means of a support bridge 33b extending transversely from the probe body 33. In any case, the fins 34 are arranged so as to be inclined and diverge from each other in the direction towards the base 32. The ends of the fins 34 are spaced from each other by a distance greater than the width of the window 12.

During the assembly of the sensor 30 on the wall portion 11 of the air distribution box 10, the probe body 33 is inserted into the window 12 from the outer side towards the inner side of the air distribution box 10. The initial engagement between the ends of the fins 34 and the opposite sides 12a of the edge of the window 12 causes the fins 34 to flex towards each other. Continuing the movement of the sensor 30 towards the wall portion 11, the ends of the fins 34 are brought beyond the opposite sides 12a of the edge of the window 12, causing the elastic release of the fins 34.

At the end of the assembly, the positioning formation 32b is located inside the window 12, while the ends of the fins 34 rest on the inner face 11a of the wall portion 11. In this way, the sensor 30 is held in position in the window 12.

## Claims

1. Interface for mounting a sensor (30) to an air distribution box (10) of an HVAC system, comprising
a wall portion (11) of plastic material, through which a window (12) having a quadrilateral shape is formed, said wall portion (11) having an inner face (11a) arranged within the air distribution box (10), and an outer face (11b) opposite the inner face (11a), and
a sensor (30) comprising a base (32) and a probe body (33) connected to the base (32) and carrying a sensing element (31) responsive to a physical quantity to be sensed within the air distribution box (10),
**characterized in that** the base (32) of the sensor (30) comprises a mounting plate (32a) of plastic material configured to rest against the outer face (11b) of the wall portion (11), the probe body (33) protruding from said mounting plate (32a) through said window (12),
wherein at least one positioning formation (32b) is formed on said mounting plate (32a) around a root (33a) of said probe body (33), said at least one positioning formation (32b) being configured to fit within said window (12) and having at least one edge portion (32c) matching with the edge of said window (12), and
wherein the probe body (33) comprises a pair of fins (34) protruding towards the base (32) of the sensor (30) and configured to snap engage respective opposite sides (12a) of the edge of said window (12), on the inner face (11a) of said wall portion (11).

2. Interface according to claim 1, wherein respective ends of the fins (34) are configured to rest on the inner face (11a) of said wall portion (11).

3. Interface according to claim 1 or 2, wherein the opposite sides (12a) of the edge of said window (12) are parallel.

4. Interface according to claim 3, wherein said window (12) has a rectangular shape.
